# EUROPEAN PATENT APPLICATION

(11) **EP 1 834 562 A1**
(43) Date of publication of application: **19.09.2007**
(21) Application number: 06005215.6
(22) Date of filing: 14.03.2006
(51) Int. Cl.: A47J 47/00

(54) **Basket for receiving vegetables and fruits**

(71) Applicant: Yang, Heng-Te, Tainan City (TW)
(72) Inventor: Yang, Heng-Te, Tainan City (TW)
(74) Representative: Volpert, Marcus

(57) **Abstract**

A basket for receiving vegetables or fruits comprises a basket 1 having a knife receiving seat 10 at a center portion thereof; the knife receiving seat 10 having an insertion hole 100; a strip 11 being protruded from a bottom of the basket 1; a knife being inserted in the insertion hole 100 of the knife receiving seat 10; an upper side of the knife 2 having a handle 20; a disk 3 being placed at the bottom of the basket 1; a recess 30 being formed on the disk 3 for receiving the strip 11 at the bottom of the basket 1 so as to position the basket 1 on the disk 3. In assembly, the knife 2 is inserted into the insertion hole 100 of the knife receiving seat 10; then the basket 1 is placed upon the disk 3 by the strip 11 to buckle to the recess 30 of the disk 3. In assembly, the handle 20 exactly resists against an upper side of the knife receiving seat 10.

## Description

### FIELD OF THE INVENTION

The present invention relates to baskets, and in particular to a basket for receiving vegetables and fruits, wherein a basket is located upon a disk firmly, and a knife is inserted into a knife receiving seat of the basket. In use, the basket can be taken out easily. The juicy of vegetables and fruits will collect on the disk without flowing out.

### BACKGROUND OF THE INVENTION

In the prior art, the basket for receiving vegetables and fruits is a rectangular shape, or round shape disk, which are integral formed. Vegetables or fruits can be placed upon the disk. In use, the vegetables or fruits are taken out from the basket and placed upon a cutting board for cutting by a knife. Generally, the cutting board is a flat board. In cutting the vegetables or fruits, juicy will flow out. Thus paper or cloth is paved for receiving the juicy. However the operation is tedious and time-consumed.

### SUMMARY OF THE INVENTION

Accordingly, the primary object of the present invention is to provide a basket for receiving vegetables and fruits, wherein a basket is located upon a disk firmly, and a knife is inserted into a knife receiving seat of the basket. In use, the can be taken out easily. The juicy of vegetables and fruits will collect on the disk without flowing out.

To achieve above objects, the present invention provides a basket for receiving vegetables and fruits which comprises a basket having a knife receiving seat at a center portion thereof; the knife receiving seat having an insertion hole; a strip being protruded from a bottom of the basket; a knife being inserted in the insertion hole of the knife receiving seat; an upper side of the knife having a handle; a disk being placed at the bottom of the basket; a recess being formed on the disk for receiving the strip at the bottom of the basket so as to position the basket on the disk. In assembly, the knife is inserted into the insertion hole of the knife receiving seat; then the basket is placed upon the disk by the strip to buckle to the recess of the disk. In assembly, the handle exactly resists against an upper side of the knife receiving seat.

The various objects and advantages of the present invention will be more readily understood from the following detailed description when read in conjunction with the appended drawing.

### BRIEF DESCRIPTION OF DRAWINGS

Fig. 1 is an exploded perspective view of the present invention.
Fig. 2 is an assembled perspective view of the present invention.
Fig. 3 shows the use of the present invention.
Fig. 4 shows another application of the present invention.

### DETAILED DESCRIPTION OF THE PREFERRED EMBODIMENTS

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

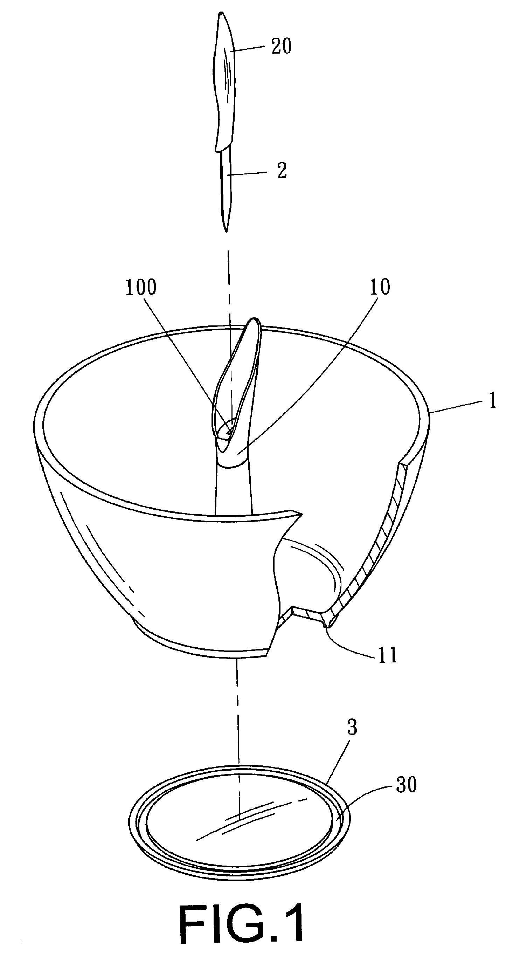

Referring to Fig. 1 the structure of the present invention is illustrated.

A basket 1 has a knife receiving seat 10 at a center portion thereof. The knife receiving seat 10 has an insertion hole 100. A strip 11 is protruded from a bottom of the basket 1. A knife 2 is inserted in the insertion hole 100 of the knife receiving seat 10. An upper side of the knife 2 has a handle 20. A disk 3 is placed at the bottom of the basket 1. A recess 30 is formed on the disk 3 for receiving the strip 11 at the bottom of the basket 1 so as to position the basket 1 on the disk 3.

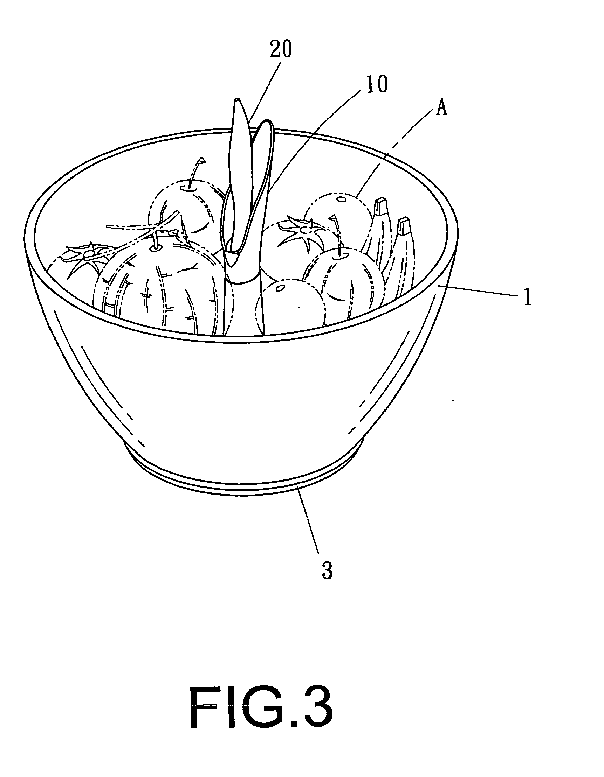

In assembly, referring to Figs. 1 to 3, the knife 2 is inserted into the insertion hole 100 of the knife receiving seat 10. The handle 20 exactly resists against an upper side of the knife receiving seat 10. The handle 20 of the knife 2 and the knife receiving seat 10 are formed with a beautiful outlook. Then the basket 1 is placed upon the disk 3 by the strip 11 to buckle to the recess 30 of the disk 3.

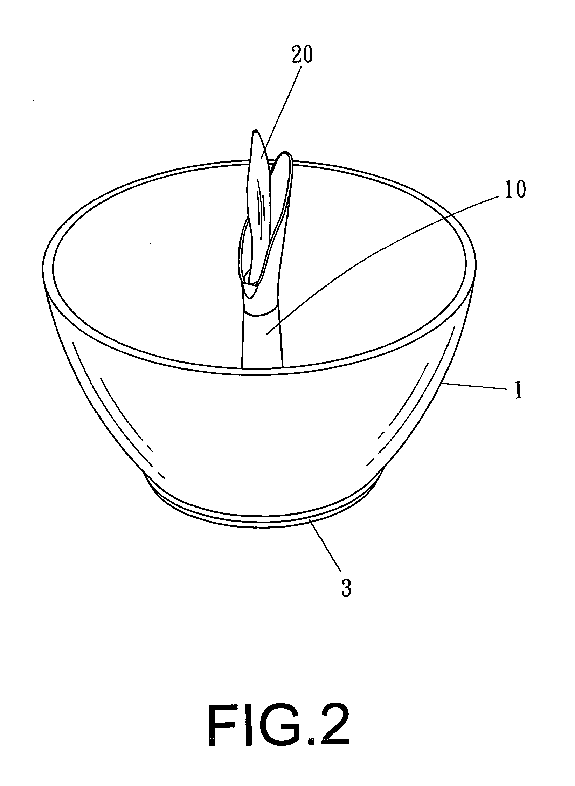

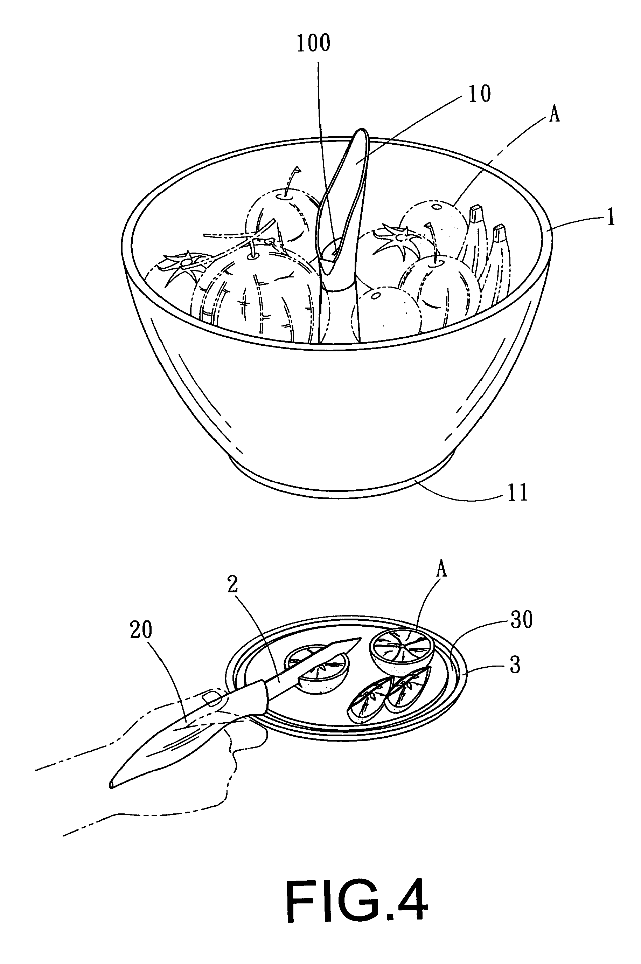

Referring to Figs. 2 to 4, in use, when vegetables or fruits A are placed in the basket 1, the basket 1 is taken out from the disk 3. Then the vegetables or fruits A are placed upon the disk 3. Then the knife 2 is withdrawn from the insertion hole 100 of the knife receiving seat 10 for cutting the vegetables and fruits A. The juicy flowing out of the vegetables and fruits A can be received by the recess 30 of the disk 3. Thereby the juicy will not flow out disorderly. Thereby the knife 2 and basket 1 can be placed and taken out easily and convenient.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A basket for receiving vegetables or fruits comprising:
a basket having a knife receiving seat at a center portion thereof; the knife receiving seat having an insertion hole; a strip being protruded from a bottom of the basket; a knife being inserted in the insertion hole of the knife receiving seat; an upper side of the knife having a handle; a disk being placed at the bottom of the basket; a recess being formed on the disk for receiving the strip at the bottom of the basket so as to position the basket on the disk;
wherein in assembly, the knife is inserted into the insertion hole of the knife receiving seat; then the basket is placed upon the disk by the strip to buckle into the recess of the disk.

2. The basket for receiving vegetables or fruits as claimed in claim 1, wherein in assembly, the handle exactly resists against an upper side of the knife receiving seat.
